# EUROPEAN PATENT APPLICATION

(11) **EP 4 575 805 A1**
(43) Date of publication of application: **25.06.2025**
(21) Application number: 24220891.6
(22) Date of filing: 18.12.2024
(51) Int. Cl.: G06F 11/3668

(54) **METHOD AND SYSTEM FOR PREDICTING ONE OR MORE ATTRIBUTES OF TEST CASES**

(30) Priority: 19.12.2023 GB 202319457
(71) Applicant: Continental Automotive Technologies GmbH, 30175 Hannover (DE); Nanyang Technological University, Singapore 639798 (SG)
(72) Inventor: Lim, Zi Pong, 339780 Singapore (SG); Teo, Yon Shin, 339780 Singapore (SG)
(74) Representative: Continental Corporation

(57) **Abstract**

There is provided a computer-implemented method for predicting one or more attributes of test cases comprising: receiving a plurality of test cases from a test case library, each test case comprising text descriptions of one or more executable test steps of the test case; generating a corpus-level graph representative of the plurality of test cases; and feeding the corpus-level graph into a trained temporal graph neural network to predict one or more attributes of each test case that affect an testing report of software, hardware, and/or system testing using the test case. There is further provided a computing system, use of computer-implemented method, computer program, machine-readable storage medium, and data carrier signal.

## Description

### TECHNICAL FIELD

This disclosure is related generally to software, hardware, and/or system testing, and more specifically to the representation and prediction of one or more attributes of test cases for software, hardware, and/or system testing by generating a testing report.

### CROSS REFERENCE TO RELATED APPLICATIONS

This application claims the benefit of GB 2319457.4 entitled "Method and System for Predicting One or More Attributes of Test Cases" filed on 19 December 2023, which is hereby incorporated by reference herein in the entirety.

### BACKGROUND

In the field of software-based testing, machine learning techniques like classification, regression, clustering and reinforcement learning have been proposed for test case prioritization. However, such techniques usually require access to source code for software testing. In system testing, access to source code is usually not granted, and there are no trivial ways to transfer proposed solutions directly from software testing to system testing. The existing methods also do not account for behaviours and interactions between hardware components that may exist during system testing.

For system testing, current methods rely on test managers to produce or design test cases, thereby relying heavily on the intuition and experience of the test manager. There is also a lack of approaches that can guide the decision-making process of the test managers as well as guarantee the quality of test plans generated.

Existing methods for automatically generating test plans include the usage of evolutionary algorithms and support vector machines. An existing method that uses an evolutionary algorithm (EA) utilises belief models based on heuristic performance of test cases to generate test plans by recommending test cases to use and the number of cycles each test case should be run. However, such method is unable to deal with new test cases without prior performance history, or test cases that were never seen during the training phase after deployment, and the evaluation of test cases and test plans of such method is unable generalise to previously unseen test cases. An existing method that uses support vector machine (SVM) applies natural language processing (NLP) techniques on test case descriptions and metadata before using SVM to classify test cases as important or unimportant. However, such method assumes that test case descriptions are always available, which may not always be applicable. In addition, such method also assumes that test case descriptions are consistent across the industry, which may not be the case as test case descriptions are usually non-empirical and may differ from user to user.

### SUMMARY

It is an object of the present disclosure to provide a method of predicting attributes of test cases that affect the testing report of hardware, software, and/or system testing using such test cases by providing the subject-matter of the independent claims.

The object of the present disclosure is solved by the subject-matter of the independent claims, wherein further embodiments are incorporated into the dependent claims.

It shall be noted that all embodiments of the present disclosure concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

To solve the above technical problems, the present disclosure provides a computer-implemented method comprising:
receiving a plurality of test cases from a test case library, each test case comprising text descriptions of one or more executable test steps of the test case;
generating a corpus-level graph representative of the plurality of test cases; and
feeding the corpus-level graph into a trained temporal graph neural network to predict one or more attributes of each test case that affect a testing report of software, hardware, and/or system testing using the test case.

The computer-implemented method of the present disclosure is advantageous over known methods as the disclosed method is able to predict attributes of test cases that affect the testing report of software, hardware, and/or system testing using the test case without prior performance history and without running the test case. The prediction uses a corpus-level graph that represents and preserves information on the complex interactions and relationships (including temporal relationships) of different components, properties and attributes of test cases using nodes and edges, thereby potentially uncovering patterns, trends, and insights that may be difficult using other methods. The corpus-level graph is a graph-structured data that is advantageous over traditional tabular data structures as it has greater interpretability due to easy visualisation of relationships and paths in the data. Graph-structured data is also advantageous as it provides machines with contextual information by showing how entities are connected to each other, making it easier to train machine learning models compared to the traditional tabular data. In addition, the usage of a trained temporal graph neural network may allow more accurate prediction of attributes as the trained temporal graph neural network accounts for the temporal relationship present in the corpus-level graph. The trained temporal graph neural network is also advantageous for sequential processing in the present disclosure as it is independent of word order.

A preferred method of the present disclosure is a computer-implemented method as described above, wherein the corpus-level graph comprises:
a plurality of word nodes, wherein each word node represents one or more words in the text descriptions;
a plurality of test step nodes, wherein each test step node represents a test step;
a plurality of undirected edges connecting word nodes to their associated test step nodes; and
a plurality of directed edges connecting test step nodes that impose an ordering relationship that specifies an ordering among the executable test steps represented by the test step nodes.

The above-described aspect of the present disclosure has the advantage that the specific topology of the corpus-level graph represents and preserves information on the complex interactions and relationships (including temporal relationships) of different components, properties and attributes of test cases, thereby potentially better predicting any attributes of test cases. The topology of the corpus-level graph is also a consistent representation for test cases and the test case libraries that can potentially be more easily integrated or fed into downstream applications. The specific topology is also advantageous as the predictions generated by a trained temporal graph neural network may be easily adapted to never before seen executable test steps and test case as the learnt information is embedded at the word node level.

A preferred method of the present disclosure is a computer-implemented method as described above or as described above as preferred, wherein the one or more words represented by word nodes are identified from the text descriptions using tokenization and/or text cleaning.

The above-described aspect of the present disclosure has the advantage that text pre-processing techniques such as tokenization and text cleaning eliminate stop words, punctuation and other irrelevant text from the text descriptions, thereby identifying and retaining the important properties, parameters or components present within the text description to be represented in the corpus-level graph. Tokenization, in particular, splits a long sentence or text into individual words or tokens, and is advantageous as it facilitates more efficient and structed text analysis by enabling models to learn embeddings that represent each of the token unit which may then be combined into a meaningful representation of a sentence or graph in the text description. Tokenization also enables normalization of the text, which allows techniques such as stemming and stop-word removal to be more easily applied. The tokenizer also eliminates irrelevant text from the text descriptions, thereby allowing the consolidation of text descriptions from various different sources that may have inconsistent language. Furthermore, the usage of a tokenizer may allow easier training of the temporal graph neural network as only important words or features are identified and accounted for.

A preferred method of the present disclosure is a computer-implemented method as described above or as described above as preferred, wherein generating a corpus-level graph representative of the plurality of test cases comprises:
generating a test case graph for each test case of the plurality of test cases, comprising:
   building a test step graph for each test step of the test case, each test step graph comprising a test step node connected to a plurality of word nodes with undirected edges;
   connecting the test step graphs of each test case to generate the test case graph, wherein the test step nodes of the test step graphs are connected with directed edges
   based on the ordering relationship, and wherein word nodes common to two or more executable test steps are merged; and
connecting the test case graphs to generate the corpus-level graphs, wherein test step nodes that are common to two or more test cases are merged.

The above-described aspect of the present disclosure has the advantage that information about each test case (e.g., attributes such as failure rate, etc) is used to train the test step nodes and word nodes (i.e., through information trickle down), such that when a new test case or test step appears, the information learnt by the word nodes may be used to construct an embedding for the new executable test steps and new test cases, and to make inferences or predictions (e.g., prediction of failure rate) for such new test step or test case.

A preferred method of the present disclosure is a computer-implemented method as described above or as described above as preferred, wherein the test cases further comprise text descriptions of one or more pre-conditions, wherein the corpus-level graph further comprises one or more pre-condition nodes, wherein each pre-condition node represents a pre-condition and is connected to one or more word nodes by undirected edges, wherein if there is more than one pre-condition node, the pre-condition nodes are connected by directed edges that impose an ordering relationship that specifies an ordering among the pre-conditions represented by the pre-condition nodes, and wherein the last-ordered pre-condition node is connected to a first-ordered test step node of the test case by a directed edge.

The above-described aspect of the present disclosure has the advantage that the inclusion or accounting of pre-conditions provides additional context to the model such as information on how a test case is set up and what modules/components the test case may be related to, thereby providing more useful information that can be used by the model to better infer, relate, or generalise the test case to other test cases.

A preferred method of the present disclosure is a computer-implemented method as described above or as described above as preferred, wherein the test cases further comprise text descriptions of expected results, wherein the corpus-level graph further comprises one or more expected result nodes, wherein each expected result node represents an expected result and is connected to one or more word nodes by undirected edges, wherein if there is more than one expected result node, the expected result nodes are connected by directed edges that impose an ordering relationship that specifies an ordering among the expected results represented by the expected result nodes, and wherein the first-ordered expected result node is connected to a last-ordered test step node of the test case by a directed edge.

The above-described aspect of the present disclosure has the advantage that the inclusion or accounting of expected results provide additional context to the model such as information on how the different modules/components should react after running a test case, thereby providing more useful information that can be used by the model to better infer, relate, or generalise the test case to other test cases.

A preferred method of the present disclosure is a computer-implemented method as described above or as described above as preferred, further comprising:
associating each test case with its predicted one or more attributes;
generating a test plan to test a software, hardware, and/or system based on the test cases with predicted one or more attributes;
executing one or more test cases of the test plan to generate test results; and
identifying one or more faultss in the software, hardware, and/or system based on the generated test results,
wherein executing the one or more test cases of the test plan preferably comprises testing the software, hardware, and/or system on a vehicle and generating test results using signals received from one or more vehicle components.

The above-described aspect of the present disclosure has the advantage that faultss in a software, hardware, and/or system may be better identified using the results of the test plan generated based on the test cases with predicted attributes, thus assisting in the creation of software, hardware, and/or systems with less faultss. Executing the at least one test case by testing on a vehicle and generating test results using signals received from the one or more vehicle components also ensures that the software hardware, and/or systems would be safe for implementation on a vehicle.

A preferred method of the present disclosure is a computer-implemented method as described above or as described above as preferred, wherein executing the one or more test plans is carried out automatically, preferably using one or more automation scripts.

The above-described aspect of the present disclosure has the advantage that the implementation of the test plan may be automatically carried out without human intervention, thus increasing the efficacy of the implementation of the test plan.

The above-described advantageous aspects of a computer-implemented method of the disclosure also hold for all aspects of a below-described computing system of the disclosure. All below-described advantageous aspects of a computing system of the disclosure also hold for all aspects of an above-described computer-implemented method of the disclosure.

The present disclosure also relates to a computing system comprising one or more processors and memory storing one or more programs for execution by the one or more processors, the one or more programs including instructions for carrying out a computer-implemented method according to any of the preceding claims.

A preferred method of the present disclosure is a computing system as described above, wherein the computing system is connected to a vehicle and configured to receive signals from one or more vehicle components.

The above-described aspect of the present disclosure has the advantage that the test plan may be implemented on software, hardware, and/or systems for vehicle applications and may be tested and evaluated based on signals from vehicle components, thus ensuring that the software, hardware, and/or systems for vehicle applications is safe to be implemented in vehicles.

The above-described advantageous aspects of a computer-implemented method or computing system of the disclosure also hold for all aspects of a below-described use of a computer-implemented method of the disclosure. All below-described advantageous aspects of use of a computer-implemented method of the disclosure also hold for all aspects of an above-described computer-implemented method or computing system of the disclosure.

The present disclosure also relates to use of a computer-implemented method of the present disclosure.

The above-described advantageous aspects of a computer-implemented method, computing system, or use of a computer-implemented method of the disclosure also hold for all aspects of a below-described computer program, a machine-readable storage medium, or a data carrier signal of the disclosure. All below-described advantageous aspects of a computer program, a machine-readable storage medium, or a data carrier signal of the disclosure also hold for all aspects of an above-described computer-implemented method, computing system, or use of a computer-implemented method of the disclosure.

The present disclosure also relates to a computer program, a machine-readable storage medium, or a data carrier signal that comprises instructions, that upon execution on a data processing device and/or control unit, cause the data processing device and/or control unit to perform the steps of a computer-implemented method according to the disclosure. The machine-readable medium may include any medium and/or mechanism for storing or transmitting information in a form readable by a machine (e.g., a computing device). The machine-readable medium may be any medium, such as for example, read-only memory (ROM); random access memory (RAM); a universal serial bus (USB) stick; a compact disc (CD); a digital video disc (DVD); a data storage device; a hard disk; electrical, acoustical, optical, or other forms of propagated signals (e.g., digital signals, data carrier signal, carrier waves), or any other medium on which a program element as described above can be transmitted and/or stored.

As used in this summary, in the description below, in the claims below, and in the accompanying drawings, the term "test case" refers to a pre-defined testing procedure that tests certain functionalities of the software to be tested. An example of a pre-defined testing procedure is the procedure used to test if a seat belt detection system of a vehicle is working.

As used in this summary, in the description below, in the claims below, and in the accompanying drawings, the term "component" refers to any software or hardware that is a part or element of asystem to be tested. For example, where the system to be tested is a vehicle, a component may refer to any software or hardware that is a part or element of the vehicle and may be part of one or more systems within a vehicle. Examples of components of a vehicle include the engine, battery, alternator, brakes, radiator, transmission, shock absorbers, convertors, steering, electronic control units, suspension, sensors, etc.

### BRIEF DESCRIPTION OF THE DRAWINGS

These and other features, aspects, and advantages will become better understood with regard to the following description, appended claims, and accompanying drawings where:
Fig. 1 is a schematic illustration of a computer-implemented method of predicting attributes of test cases and identifying faultss in software, hardware, and/or system, in accordance with embodiments of the present disclosure;
Fig. 2 is a schematic illustration of an example of a corpus-level graph, in accordance with embodiments of the present disclosure;
Fig. 3 is a simplified test case graph representative of a test case comprising text descriptions of pre-conditions, executable test steps, and expected results, in accordance with embodiments of the present disclosure;
Figs. 4A and 4B are schematic illustrations of a method of generating a corpus-level graph representative of a plurality of test cases, in accordance with embodiments of the present disclosure;
Fig. 5 is a schematic illustration of a system that may be used for the implementation of one or more test cases, in accordance with embodiments of the present disclosure; and
Fig. 6 illustrates an example of a computing system, in accordance with embodiments of the present disclosure.

In the drawings, like parts are denoted by like reference numerals.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the summary above, in this description, in the claims below, and in the accompanying drawings, reference is made to particular features (including method steps) of the disclosure. It is to be understood that the disclosure in this specification includes all possible combinations of such particular features. For example, where a particular feature is disclosed in the context of a particular aspect or embodiment of the disclosure, or a particular claim, that feature can also be used, to the extent possible, in com-bination with and/or in the context of other particular aspects and embodiments of the disclosure, and in the disclosure generally.

In the present document, the word "exemplary" is used herein to mean "serving as an example, instance, or illustration." Any embodiment or implementation of the present subject matter described herein as "exemplary" is not necessarily be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the forms disclosed, but on the contrary, the disclosure is to cover all modifications, equivalents, and alternative falling within the scope of the disclosure.

The present disclosure is directed to computer-implemented methods, computing systems, use of computer-implemented methods, computer programs, machine-readable storage media, and data carrier signals for the generation of graph representation and prediction of attributes of test cases. Attributes that affect the testing report or result of hardware, software, and/or system testing are predicted using trained temporal graph neural networks, and the predicted attributes may be associated with their respective test cases The test cases with predicted attributes may then be used to generate test plans that can be implemented to identify faults in software, hardware, and/or system.

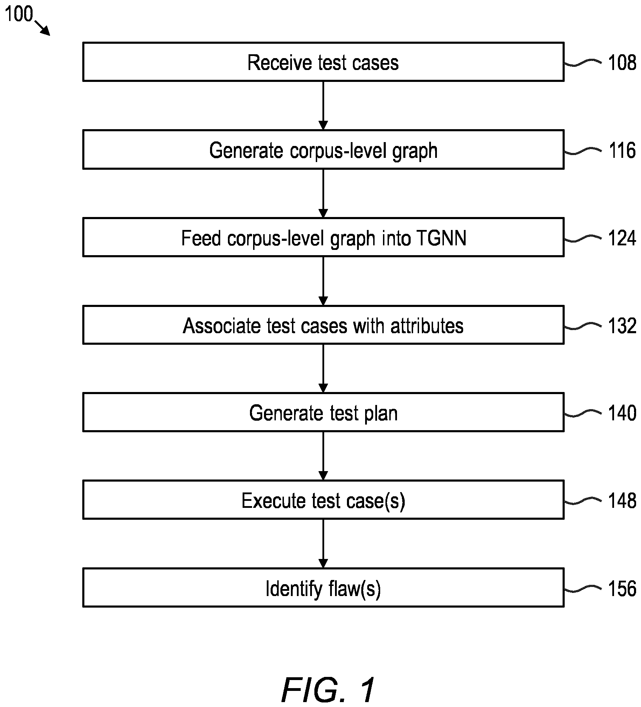

Fig. 1 is a schematic illustration of a computer-implemented method 100 of predicting attributes of test cases and identifying faults in software, hardware, and/or system, in accordance with embodiments of the present disclosure. Method 100 for detecting fault of a software, hardware, and/or system may be implemented by a data processing device on any architecture and/or computing system. For example, various architectures employing, for example, multiple integrated circuit (IC) chips and/or packages, and/or various computing devices and/or consumer electronic (CE) devices, such as multi-function devices, tablets, smart phones, etc., may implement the techniques and/or arrangements described herein. Method 100 may be stored as executable instructions that, upon execution on a data processing device and/or control unit, cause the data processing device and/or control unit to perform the steps of method 100.

According to some embodiments, method 100 for diagnosing fault of a software, hardware, and/or system may comprise step 108 wherein a plurality of test cases is received from a test case library. The plurality of test cases may comprise test cases for assessing a software. In some embodiments, the plurality of test cases may be defined based on the software to be assessed. By way of an example, the plurality of test cases may comprise test cases for testing of automotive functions for a software to be used for an automotive or vehicle application. In some embodiments, the plurality of test cases may be defined based on the test objectives, the software, hardware, or system features and/or functions to be tested, and/or the stage or phase of software, hardware, or system development. The test objectives may be any test objectives, including technical and/or business objectives. The test cases may be any type of test case, including functionality test cases, performance test cases, unit test cases, user interface test cases, security test cases, integration test cases, database test cases, usability test cases, user acceptance test cases, regression test cases, lifecycle test, stress test, or any combination thereof. The test case library may comprise test cases executed on previous versions of the software, hardware or system, test cases previously executed on similar software, hardware, or system, newly defined test cases and/or generic test cases. A newly defined test case may be a test case that is newly created, designed, or defined to test the software, hardware, or system and has yet to be implemented and/or executed. New test cases may be defined and added to the test case library in situations where there are new requirements or features and the test cases in the test case library do not cover such new requirements. Generic test cases may be test cases defined for features that may be common across different software, applications, and/or product lines, and may be reused and/or readapted with minimal effort. Examples of generic test cases include test cases designed to test functionalities, such as backup battery, Bluetooth, emergency call. In some embodiments, the test case library may be stored on a data storage device and retrieved when implementing method 100.

According to some embodiments, each test case may comprise text descriptions of one or more executable test steps of the test case. Table 1 below illustrates examples of test cases with associated text descriptions of executable test steps of each test case. As illustrated in Table 1, each test case may be associated with text descriptions of one or more executable test steps.

**Table 1**

| Test Case ID | Executable test steps/variations |
|---|---|
| TC_ATP_01 | - DCM is in RUN Mode |
| | - Trigger SOS Call |
| | - End the SOS Call using debug console |
| | - Perform IGN, ACC to off |
| | ... next testcycle |
| TC_ATP_04 | - DCM is in RUN Mode |
| | - Perform OFF IGN, ACC |
| | - Before STANDBY, Turn ON ACC, IGN |
| | -... next testcycle |

According to some embodiments, each test case may further comprise text descriptions of one or more pre-conditions and/or one or more expected results. Table 2 below illustrates examples of test cases with associated text descriptions of one or more pre-conditions, one or more executable test steps or variations, and one or more expected results. In some embodiments, the text descriptions of one or more pre-conditions, one or more executable test steps or variations, and one or more expected results may be concatenated into a single column (see Table 3 below). It is emphasised that although the examples provided only list pre-conditions, executable test steps, and expected results as test case parameters, there may be other test case parameters that can be associated with the test cases and represented in the corpus level graph.

**Table 2**

| Test Case ID | Pre-condition | Executable test steps/variations | Expected Result |
|---|---|---|---|
| TC_ATP_01 | 1.DCM is flashed with latest Software | - DCM is in RUN Mode | 1. SOS Call should be connected |
| | 2. DCM Veh Architecture & Persistency is updated | - Trigger SOS Call | properly and end properly |
| | | - End the SOS Call using debug console | |
| | 3. DCM configured & activated | - Perform IGN, ACC to off | |
| | 4. Required Services are activated | - ... next testcycle | |
| TC_ATP_04 | 1.DCM is flashed with latest Software | - DCM is in RUN Mode | 1. No resets seen |
| | 2. DCM Veh Architecture & Persistency is updated | - Turn OFF IGN, ACC | |
| | | - Before STANDBY, Turn ON ACC, IGN | |
| | 3. DCM configured & activated | - ... next testcycle | |
| | 4. BUB connected | | |

**Table 3**

| Test Case ID | Description |
|---|---|
| TC_ATP_01 | 1.DCM is flashed with latest Software |
| | 2. DCM Veh Architecture & Persistency is updated |
| | 3. DCM configured & activated |
| | 4. Required Services are activated |
| | - DCM is in RUN Mode |
| | - Trigger SOS Call |
| | - End the SOS Call using debug console |
| | - Perform IGN, ACC to off |
| | ... next testcycle1. SOS Call should be connected properly and end properly |
| TC_ATP_04 | 1.DCM is flashed with latest Software |
| | 2. DCM Veh Architecture & Persistency is updated |
| | 3. DCM configured & activated |
| | 4. BUB connected |
| | - DCM is in RUN Mode |
| | - Turn OFF IGN, ACC |
| | - Before STANDBY, Turn ON ACC, IGN |
| | - ... next testcycle |
| | 1. No resets seen |

According to some embodiments, method 100 may comprise step 116 wherein a corpus-level graph representative of the plurality of test cases is generated. A corpus-level graph represents all the test cases of the plurality of test cases and may comprise one or more nodes and one or more edges connecting the one or more nodes.

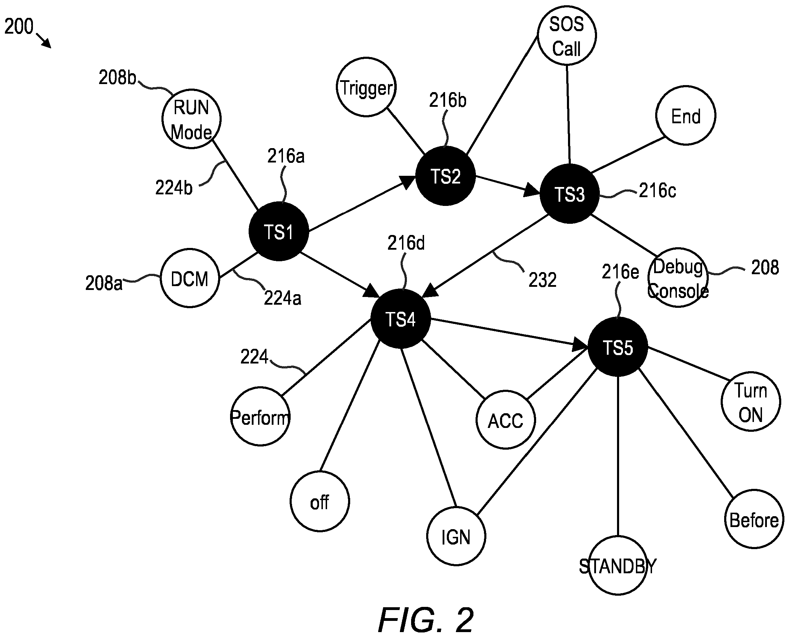

Fig. 2 is a schematic illustration of an example of a corpus-level graph, in accordance with embodiments of the present disclosure. In particular, Fig. 2 illustrates a corpus-level graph 200 representative of the two test case IDs listed in Table 1. As illustrated in Fig. 2, a corpus-level graph 200 may comprise a plurality of word nodes 208 (illustrated as white circles), a plurality of test step nodes 216 (illustrated as black circles), a plurality of undirected edges 224 (illustrated as lines), and a plurality of directed edges 232 (illustrated as arrows).

According to some embodiments, each word node 208 represents one or more words in the text description of the test cases. In some embodiments, the one or more words represented by word nodes 208 may be components listed in the text description. In some embodiments, the one or more words represented by word nodes 208 may be identified from the text descriptions using text pre-processing. In some embodiments, the one or more words represented by word nodes 208 may be identified from the text descriptions using spacers and text cleaning. Preferably, the one or more words represented by word nodes 208 are identified from the text descriptions using tokenization and/or text cleaning. A tokenizer breaks a stream of text into tokens by splitting a phrase, sentence, or paragraph into smaller units (termed tokens). Tokenization is carried out using tokenizer libraries and examples of tokenizer libraries include NLTK Tokenizer available at https://www.nltk.org/api/nltk.tokenize.html and spaCy Tokenizer available at https://spacy.io/api/tokenizer. Text cleaning includes processing the tokens generated by the tokenizer and includes techniques such as stopword removal, lowercasing, punctuation removal, verb stemming (jumping -> jump), white-space trimming, and/or contraction expansion (e.g., 'on't -> do not).

According to some embodiments, each test step node 216 represents a test step. In some embodiments, the plurality of undirected edges 224 connect word nodes 208 to their associated test step node 216. Each word node 208 may be connected to one or more test step nodes 216 through undirected edges 224. For example, the first test step for test ID TC_ATP_01 in Table 1 states "DCM is in RUN Mode". As illustrated in Fig. 2, the one or more words identified by tokenization and/or text cleaning are "DCM" and "Run Mode", which are represented by word nodes 208a and 208b respectively, with word nodes 208a and 208b connected to test step node 216a representative of the test step "DCM is in RUN Mode" with undirected edges 224a and 224b respectively.

According to some embodiments, the plurality of directed edges 232 connect test step nodes 216, the directed edges 232 imposing an ordering relationship that specifies an ordering among the executable test steps represented by test step nodes 216. For example, as illustrated in Fig. 2, there may be five test step nodes 216a-216e. Based on the directed edges 232, there is a first ordering of executable test steps representative of test case ID TC_ATP_01 from test step node 216a (marked as TS1) → test step node 216b (marked as TS2) → test step node 216c (marked as TS3) → test step node 216d (marked as TS4), and a second ordering of executable test steps representative of test case ID TC_ATP_04 from TC_ATP_01 from test step node 216a (marked as TS1) → test step node 216d (marked as TS4) → test step node 216e (marked as TS5).

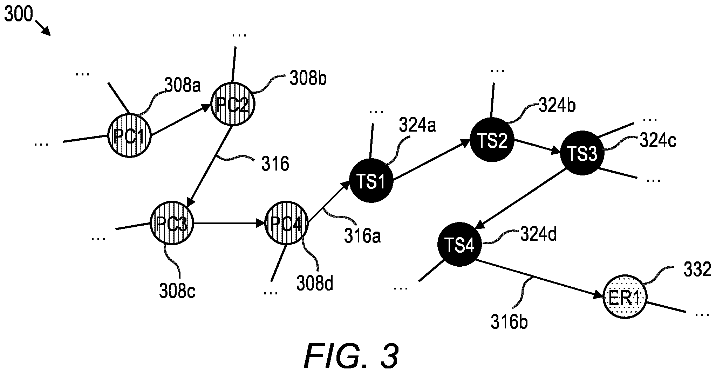

Fig. 3 is a simplified test case graph representative of a test case comprising text descriptions of pre-conditions, executable test steps, and expected results, in accordance with embodiments of the present disclosure. In particular, Fig. 3 illustrates a simplified test case graph 300 representative of the test case ID TC_ATP_01 listed in Table 2 and Table 3. The word nodes are not illustrated for ease of visualisation.

In some embodiments, graph 300 representative of a test case comprising text descriptions of pre-conditions may further comprise one or more pre-condition nodes 308 (illustrated as circles with horizontal line pattern), wherein each pre-condition node 308 represents a pre-condition associated with the test case. In the case of test case ID TC_ATP_01, there are four pre-conditions listed, and therefore there are four pre-condition nodes 308a, 308b, 308c, and 308d, each representative of a pre-condition associated with test case ID TC_ATP_01. The pre-condition nodes 308 are connected by directed edges 316 that impose an ordering relationship that specifies an ordering among the pre-conditions represented by the pre-condition nodes 308. Based on the directed edges, there is an ordering of pre-conditions associated with test case ID TC_ATP_01 from pre-condition node 308a (marked as PC1) → pre-condition node 308b (marked as PC2) → pre-condition node 308c (marked as PC3) → pre-condition node 308d (marked as PC4). In some embodiments, the last-ordered pre-condition node 308 is connected to a first ordered-test step node 324 of the test case. As illustrated in Fig. 3, there is an ordering of executable test steps associated with test case ID TC_ATP_01 from test step node 216a (marked as TS1) → test step node 216b (marked as TS2) → test step node 216c (marked as TS3) → test step node 216d (marked as TS4), with the last-ordered pre-condition node 308d connected to the first-ordered test case node 324a through directed edge 316a.

In some embodiments, graph 300 representative of a test case comprising text descriptions of expected results may further comprise one or more expected result nodes 332 (illustrated as circles with dotted pattern), wherein each expected result node 332 represents an expected result associated with a test case. In the case of test case ID TCATP_01, there is a single expected result, and therefore there is a single expected result node 332 representative of the expected result associated with test case ID TC_ATP_01. If there is more than one expected result, the expected result nodes 332 may be connected by directed edges (not illustrated) that impose an ordering relationship that specifies an ordering among the expected results represented by the expected result nodes 332. In some embodiments, the first-ordered expected result node 332 is connected to a last-ordered test step node 324. For test case ID TC_ATP_01 illustrated in Fig. 3, there is only one expected result node 332, and therefore it is connected to the last ordered test step node 324d (marked as TS4) through directed edge 316b. It is emphasised that although Figs. 2 and 3 only illustrate nodes for pre-conditions, executable test steps, and/or expected results as test case parameters, there may be other test case parameters that can be associated with the test cases and represented in the corpus-level graph as nodes connected by directed edges.

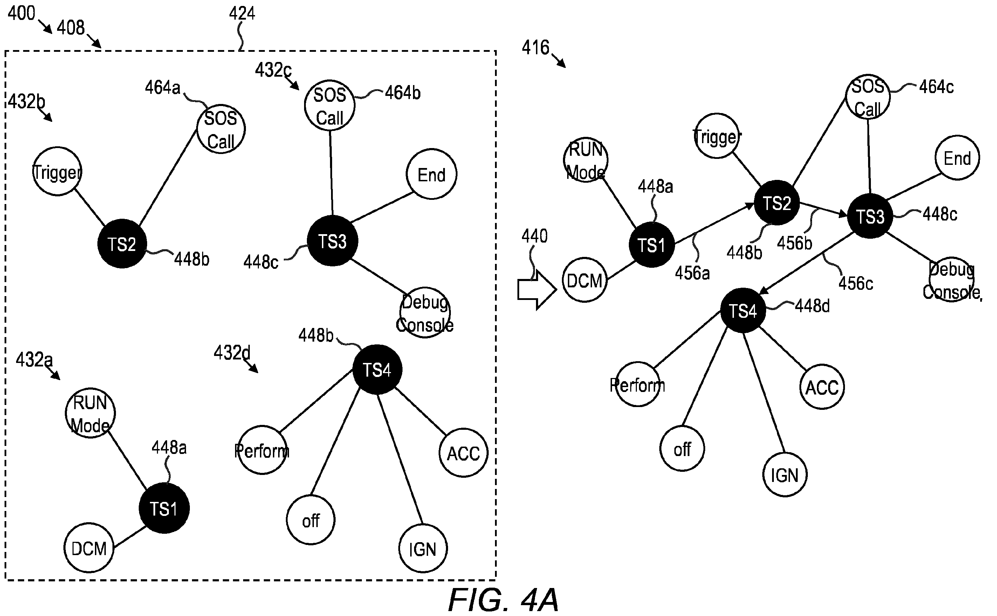

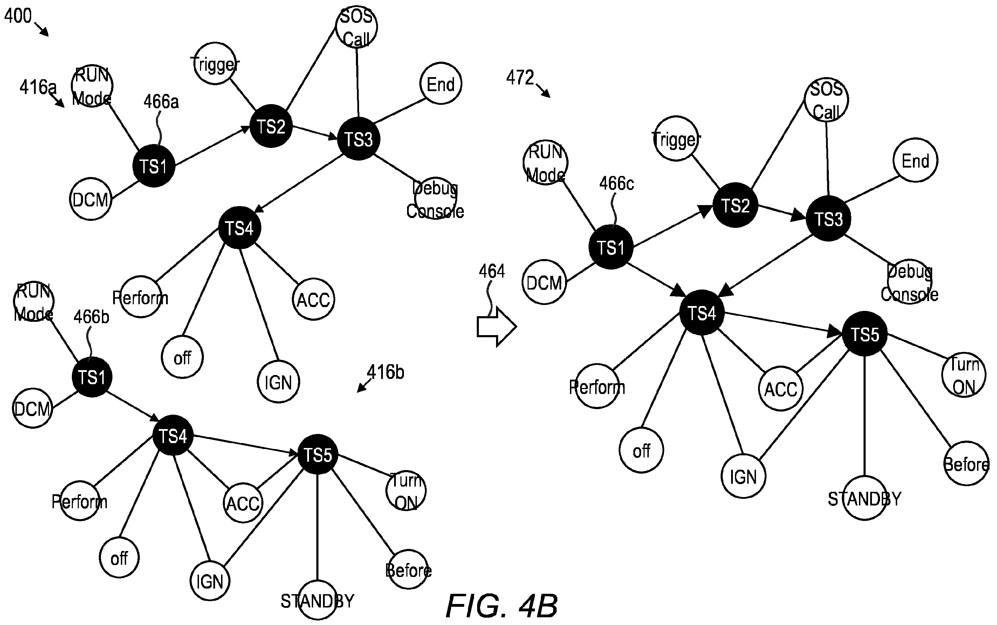

Figs. 4A and 4B are schematic illustrations of a method 400 of generating a corpus-level graph representative of a plurality of test cases, in accordance with embodiments of the present disclosure. In particular, Figs. 4A and 4B are schematic illustrations of a method of generating a corpus-level graph representative of the test cases of Table 1. According to some embodiments, method 400 may comprise step 408 wherein a test case graph 416 is generated for each test case of the plurality of test cases. In some embodiments, step 408 may comprise 2 steps: step 424 wherein a test step graph 432 is built for each test step of the test case; and step 440 wherein the test step graphs 432 of each test case is connected to generate the test case graph 416 wherein the test step nodes of the test step graphs are connected with directed edges based on the ordering relationship, and wherein word nodes common to two or more executable test steps are merged.

Fig. 4A illustrates how a test case graph 416 is generated for test case ID TC_ATP_01. Test case ID TC_ATP_01 comprises text descriptions of 4 executable test steps, and a test step graph 432 is generated for each test step in step 424: a first test step graph 432a generated for the first test step described as "DCM is in RUN Mode", a second test step graph 432b generated for the second test step described as "Trigger SOS Call", a third test step graph 432c generated for the third test step described as "End the SOS Call using debug console", and a fourth test step graph 432d generated for the fourth test step described as "Perform IGN, ACC to off'. The four test step graphs 432a-432d are then merged in step 440 to generate test case graph 416, wherein the test step nodes 448a-448d are connected with directed edges 456a-456c based on the ordering relationship of the executable test steps represented by test step nodes 448a-448d. Word nodes common to two or more executable test steps are also merged in step 440. For example, word node 464a connected to test step node 448b and word node 464b connected to test step node 448c both represent the words "SOS call", therefore the two word nodes 464a and 464b are merged in step 440 to form word node 464c which is connected to test step node 448b and 448c in the test case graph 416.

According to some embodiments, method 400 may comprise step 464 wherein test case graphs 416 are connected to generate a corpus-level graph 472, wherein test step nodes 448/466 that are common to two or more test cases 416 are merged. Fig. 4B illustrates how a corpus-level graph 472 representative of two test cases (test case ID TC_ATP_01 and test case ID TC_ATP_04). For example, test step node 466a of test case graph 416a and test step node 446b of test case graph 416b are both connected to word nodes representative of the words "RUN Mode" and "DCM", therefore the two test step nodes 466a and 466b are merged in step 464 to form test step node 466c. Although Fig. 4B describes the generating of a corpus-level graph for two cases, it is emphasized that the method is scalable and the same steps/principles are used to generate corpus-level graph representative of any number of test cases.

Referring to Fig. 1, method 100 may comprise step 124 wherein the corpus-level graph is fed into a trained temporal graph neural network to predict one or more attributes of each test case that may affect the testing report or result of software, hardware, and/or system testing using the test case. The one or more attributes may be any attributes that may affect the testing report or result of software, hardware, and/or system testing using the test case. Examples of attributes include failure rate, test coverage, test penetration, affected modules/components, test duration, and/or test type. In some embodiments, the trained temporal graph neural network may be any graph neural network connected to any sequential model or time-based model, such as recurrent neural networks (RNNs), long-short term memory models (LSTMs), or transformers. Preferably, the trained temporal graph neural network is a modified Graph-BERT. Graph-BERT is a graph-based BERT (Bidirectional Encoder Representations from Transformers) machine learning framework disclosed in "GRAPH-BERT: Only Attention is Needed for Learning Graph Representations" by Zhang *et. al.* (arXiv:2001.05140v2), which is trained with sampled nodes together with their context (also termed as "linkless subgraphs") from an input large-sized graph data such that representation learning is purely based on attention mechanisms. Graph-BERT generally comprises a few parts: (1) linkless subgraph batching; (2) node input vector embeddings; (3) graph transformer-based encoder); (4) representation fusion; and (5) functional component. Each linkless subgraph sampled covers both a target node and the surrounding context nodes. In the present disclosure, the linkless subgraphs may correspond to the test step graph, with the target nodes corresponding to the test step nodes and the connected word nodes corresponding to the surrounding context nodes. With regard to the functional component, the modified Graph-BERT may be trained on a prediction task, in particular prediction of one or more test case attributes.

In some embodiments, the architecture and training mechanism for the temporal graph neural network may correspond to the architecture and training mechanism disclosed in the paper by Zhang *et. al.* with the following modifications:
- Data label modified from LongTensor for class one hot encoding to FloatTensor
- Training loss modified from cross entropy loss (used for classification) to mean squared error (MSE) (used for regression)
- Output size of prediction modified from [number of classes] to [1].

In some embodiments, the temporal graph neural network may be trained using batches of subgraphs of test case graphs labelled with the one or more attributes (e.g., failure rates, test coverage, test penetration, affected modules/components, test duration, and/or test type).

Referring to Fig. 1, method 100 may comprise step 132 wherein each test case is associated with its associated one or more attributes predicted in step 124. In some embodiments, any known encoding methods may be used to associate the test cases with their predicted one or more attributes, such as one-hot encoding.

According to some embodiments, method 100 may comprise step 140 wherein a test plan is generated to test a software, hardware, or system based on the test cases with predicted one or more attributes output from step 132. The test plan may be generated using any known optimisation algorithms, such as Markov Decision Processes and reinforcement learning. For example, the test plan may be generated using the automatic test plan generation framework disclosed in "An Automatic Test Plan Generation Approach for Automotive Software Testing" by Cao *et. al.*

According to some embodiments, method 100 may comprise step 148 wherein one or more test cases of the generated test plan is executed to generate test results. In some embodiments, the one or more test cases may be executed on a software, hardware, and/or system. In some embodiments, the one or more test cases may be executed manually. In some embodiments, the one or more test cases may be executed automatically, preferably using one or more automation scripts. Examples of test cases that may be executed automatically include BUB (backup battery test), FOTA (firmware over the air), ATB (engine cranking, voice call), and AFT (diagnostic DTC). In some embodiments, where the software, hardware, or system is of an automotive or vehicle application, execution of the at least one test case may comprise embedding and/or testing the software, hardware, or system on a vehicle. In such embodiments, the test results may be generated using signals received from one or more vehicle components.

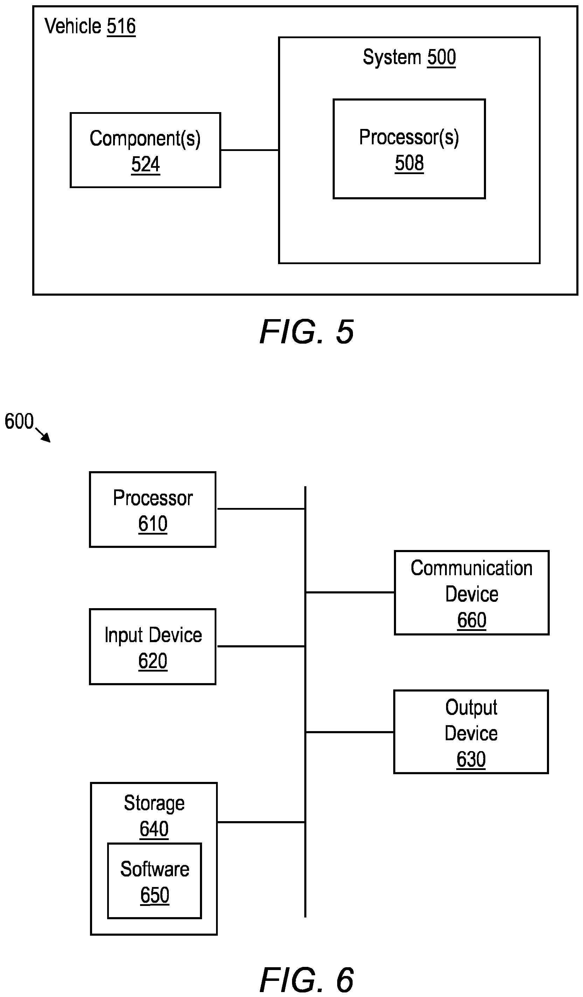

According to some embodiments, method 100 may comprise step 156 wherein one or more faults are identified in the software, hardware, and/or system based on the test results generated in step 148. For example, when running the BUB test, if the test results indicate that the back-up battery is not actively supplying power or is not deactivating when the power has been turned off, there may be faults identified in the backup battery module (i.e., the module that controls the backup battery) of the software. The implementation of steps 148 and 156 are discussed in further detail in relation to Fig. 5.

Fig. 5 is a schematic illustration of a system that may be used for the implementation of one or more test cases, in accordance with embodiments of the present disclosure. System 500 may be used to implement one or more steps of method 100. In some embodiments, system 500 may comprise one or more processors 508 configured to carry out step 148 of method 100. In some embodiments, system 500 may be installed in a vehicle 516 for testing the software, hardware, or system to be tested and executing one or more test cases on such software, hardware, or system on the vehicle. In some embodiments, executing the one or more test cases on such software, hardware, or system on the vehicle may comprise the control of one or more vehicle components 524 and/or receipt of signals from the one or more vehicle components 524. An example of a test case that may be run on a vehicle is a test for emergency call (safety system), wherein airbag pulse wide modulation (PWM) and control area network (CAN) signals are collected and used by a data communication module (DCM) to make decisions of collision detection, in which an Advanced Collision Notification Call feature will be triggered (ECall). Another example of a test case that may be run on a vehicle is a test for backup battery (BUB), wherein an Arduino platform is used to control a data communication module (DCM) with coding, and a system on chip (SOC) and vehicle microcontroller (VUC) is used to monitor the DCM activity. The preconditions for such BUB test is that the backup battery is connected, the DCM power is ON, the ignition (IGN) is ON, and the ACC (accessory) is ON. The steps for such a BUB test is as follows:
1. Check that serial ports are not occupied by other communication channel other than the automation test platform (ATP) (to avoid failure of ports occupied)
2. Turn off DCM power (IGN and ACC still on)
3. ATP wait for 10 sec
4. Check BUB is actively supplying power
5. ATP wait for 5 sec
6. Turn on DCM power (IGN and ACC still on)
7. Check BUB is inactive

If any of the checking of step 4, followed by step 7 has failed, faultss in the BUB module of the tested software might be identified. In some embodiments, the faultss may be identified by further attention of the tester. The faultss may be in the software, hardware, and/or system.

Fig. 6 illustrates an example of a computing system, in accordance with embodiments of the present disclosure. Computing system 600 can be used, for example, for one or more steps of method 100. Computing system 600 can be used for one or more of components of system 500 of Fig. 5. System 600 can be a computer connected to a network. System 600 can be a client or a server. As shown in Fig. 6, system 600 can be any suitable type of processor-based system, such as a personal computer, workstation, server, handheld computing device (portable electronic device) such as a phone or tablet, or an embedded system or other dedicated device. The system 600 can include, for example, one or more of input device 620, output device 630, one or more processors 610, storage 640, and communication device 660. Input device 620 and output device 630 can generally either be connectable or integrated with the computing system 600. In some embodiments, storage 640 may store the test case library and/or corpus-level graph(s) generated.

Input device 620 can be any suitable device that provides input, such as a touch screen, keyboard or keypad, mouse, gesture recognition component of a virtual/augmented reality system, or voice-recognition device. Output device 630 can be or include any suitable device that provides output, such as a display, touch screen, haptics device, virtual/augmented reality display, or speaker.

Storage 640 can be any suitable device that provides storage, such as an electrical, magnetic, or optical memory including a RAM, cache, hard drive, removable storage disk, or other non-transitory computer readable medium. Communication device 660 can include any suitable device capable of transmitting and receiving signals over a network, such as a network interface chip or device. The components of the computing system 600 can be connected in any suitable manner, such as via a physical bus or wirelessly.

Processor(s) 610 can be any suitable processor or combination of processors, including any of, or any combination of, a central processing unit (CPU), graphics processing unit (GPU), field programmable gate array (FPGA), and application-specific integrated circuit (ASIC). Software 650, which can be stored in storage 640 and executed by one or more processors 610, can include, for example, the programming that embodies the functionality or portions of the functionality of the present disclosure (e.g., as embodied in the devices as described above). For example, software 650 can include one or more programs for execution by one or more processor(s) 610 for performing one or more of the steps of method 100.

Software 650 can also be stored and/or transported within any non-transitory computer-readable storage medium for use by or in connection with an instruction execution system, apparatus, or device, such as those described above, that can fetch instructions associated with the software from the instruction execution system, apparatus, or device and execute the instructions. In the context of this disclosure, a computer-readable storage medium can be any medium, such as storage 640, that can contain or store programming for use by or in connection with an instruction execution system, apparatus, or device.

Software 650 can also be propagated within any transport medium for use by or in connection with an instruction execution system, apparatus, or device, such as those described above, that can fetch instructions associated with the software from the instruction execution system, apparatus, or device and execute the instructions. In the context of this disclosure, a transport medium can be any medium that can communicate, propagate or transport programming for use by or in connection with an instruction execution system, apparatus, or device. The transport computer readable medium can include, but is not limited to, an electronic, magnetic, optical, electromagnetic, or infrared wired or wireless propagation medium.

System 600 may be connected to a network, which can be any suitable type of interconnected communication system. The network can implement any suitable communications protocol and can be secured by any suitable security protocol. The network can comprise network links of any suitable arrangement that can implement the transmission and reception of network signals, such as wireless network connections, T1 or T3 lines, cable networks, DSL, or telephone lines.

System 600 can implement any operating system suitable for operating on the network. Software 650 can be written in any suitable programming language, such as C, C++, Java, or Python. In various embodiments, application software embodying the functionality of the present disclosure can be deployed in different configurations, such as in a client/server arrangement or through a Web browser as a Web-based application or Web service, for example.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present disclosure are intended to be illustrative, but not limiting, of the scope of the invention, which is set forth in the following claims.

## Claims

1. A computer-implemented method for automating testing of industrial hardware and/or software products, the comprising:
receiving (108), by way of one or more processors, a plurality of test cases stored in and retrievable from a test case library, each test case comprising text descriptions of one or more executable test steps of the test case;
generating (116), by way of the one or more processors, a corpus-level graph representative of the plurality of test cases; and
feeding (124) the corpus-level graph generated into a trained temporal graph neural network,
wherein the method further comprises:
generating, by way of the temporal graph neural network, a testing report containing results predicting of one or more attributes of at least one testing results of each test case that affect the testing report,
wherein the at least one testing results contained in the testing report is selected from a group consisting of failure rate test results, test coverage, test penetration, affected modules / components, test duration, and/or test type.

2. The computer-implemented method of claim 1, wherein the corpus-level graph comprises:
a plurality of word nodes (208), wherein each word node represents one or more words in the text descriptions;
a plurality of test step nodes (216), wherein each test step node represents a test step;
a plurality of undirected edges (224) connecting word nodes to their associated test step nodes; and
a plurality of directed edges (232) connecting test step nodes that impose an ordering relationship that specifies an ordering among the executable test steps represented by the test step nodes.

3. The computer-implemented method of claim 2, wherein the one or more words represented by word nodes are identified from the text descriptions using tokenization and/or text cleaning.

4. The computer-implemented method of any of claims 2 to 3, wherein generating a corpus-level graph representative of the plurality of test cases comprises:
generating (408) a test case graph for each test case of the plurality of test cases, comprising:
building (424) a test step graph for each test step of the test case, each test step graph comprising a test step node connected to a plurality of word nodes with undirected edges;
connecting (440) the test step graphs of each test case to generate the test case graph, wherein the test step nodes of the test step graphs are connected with directed edges based on the ordering relationship, and wherein word nodes common to two or more executable test steps are merged; and
connecting (464) the test case graphs to generate the corpus-level graph, wherein test step nodes that are common to two or more test cases are merged.

5. The computer-implemented method of any of claims 2 to 4, wherein the test cases further comprise text descriptions of one or more pre-conditions, wherein the corpus-level graph further comprises one or more pre-condition nodes (308), wherein each pre-condition node represents a pre-condition and is connected to one or more word nodes by undirected edges, wherein if there is more than one pre-condition node, the pre-condition nodes are connected by directed edges that impose an ordering relationship that specifies an ordering among the pre-conditions represented by the pre-condition nodes, and wherein the last-ordered pre-condition node is connected to a first-ordered test step node of the test case by a directed edge.

6. The computer-implemented method of any of claims 2 to 5, wherein the test cases further comprise text descriptions of expected results, wherein the corpus-level graph further comprises one or more expected result nodes (332), wherein each expected result node represents an expected result and is connected to one or more word nodes by undirected edges, wherein if there is more than one expected result node, the expected result nodes are connected by directed edges that impose an ordering relationship that specifies an ordering among the expected results represented by the expected result nodes, and wherein the first-ordered expected result node is connected to a last-ordered test step node of the test case by a directed edge.

7. The computer-implemented method of any of the preceding claims, further comprising:
associating (132) each test case with its predicted one or more attributes;
generating (140) a test plan to test a software, hardware, and/or system based on the test cases with predicted one or more attributes;
executing (148) one or more test cases of the test plan to generate test results; and
identifying (156) one or more faults in the software, hardware, and/or system based on the generated test results,
wherein executing the one or more test cases of the test plan preferably comprises testing the software, hardware, and/or system on a vehicle and generating test results using signals received from one or more vehicle components.

8. The computer-implemented method of claim 7, wherein executing the one or more test plans is carried out automatically, preferably using one or more automation scripts.

9. A computing system comprising one or more processors and memory storing one or more programs for execution by the one or more processors, the one or more programs including instructions for carrying out a computer-implemented method according to any of the preceding claims.

10. The computing system of claim 9, wherein the computing system is connected to a vehicle and configured to receive signals from one or more vehicle components.

11. Use of the computer-implemented method according to any one of claims 1 to 8.

12. A computer program, a machine-readable storage medium, or a data carrier signal that comprises instructions, that upon execution on a data processing device and/or control unit, cause the data processing device and/or control unit to perform the steps of a computer-implemented method according to any one of claims 1 to 8.
